Europäisches Patentamt

European Patent Office

Office européen des brevets

(11) Numéro de publication : **0 491 820 B1**

(19)

## (12) FASCICULE DE BREVET EUROPEEN

(45) Date de publication du fascicule du brevet :
21.12.94 Bulletin 94/51

(21) Numéro de dépôt : **90914205.1**

(22) Date de dépôt : **14.09.90**

(86) Numéro de dépôt international :
**PCT/FR90/00660**

(87) Numéro de publication internationale :
**WO 91/04524 04.04.91 Gazette 91/08**

(51) Int. Cl.⁵ : **G05D 23/19, A47J 27/62**

(51) Int. Cl.$^5$ : **G05D 23/19, A47J 27/62**

---

(54) DISPOSITIF ET PROCEDE DE REGULATION D'APPAREIL DE CUISSON.

(30) Priorité : **15.09.89 FR 8912105**

(43) Date de publication de la demande :
**01.07.92 Bulletin 92/27**

(45) Mention de la délivrance du brevet :
**21.12.94 Bulletin 94/51**

(84) Etats contractants désignés :
**AT BE CH DE DK ES FR GB IT LI LU NL SE**

(56) Documents cités :
**EP-A- 0 146 780
DE-A- 3 736 005
FR-A- 2 577 740**

(73) Titulaire : **COMPAGNIE EUROPEENNE POUR
L'EQUIPEMENT MENAGER "CEPEM"
18 rue du 11 Octobre
F-45140 St Jean-de-la-Ruelle (FR)**

(72) Inventeur : **BOYER, Serge
8bis, rue de Lahire
F-45000 Orléans (FR)**
Inventeur : **GOUARDO, Didier
72, allée Anne-Frank
F-45770 Saran (FR)**
Inventeur : **PITOT, Pierre
51, rue Faubourg S.-Jean
F-4500 Orléans (FR)**

(74) Mandataire : **Ruellan-Lemonnier, Brigitte
THOMSON-CSF,
SCPI,
B.P. 329,
50, rue Jean-Pierre Timbaud
F-92402 Courbevoie Cédex (FR)**

EP 0 491 820 B1

# Description

L'invention se rapporte principalement à un dispositif et à un procédé de régulation notamment de température et/ou de puissance d'appareil de cuisson.

Il est connu pour des appareils de cuisson électrique d'associer un dispositif de mesure de température à un dispositif de régulation.

Ces appareils ont pour but, après une période de préchauffage initial, de maintenir la température d'un récipient de chauffage sensiblement constante. Toutefois, on régule la température du capteur ou dans le meilleur des cas du récipient, et non pas de son contenu. En effet, pour déduire la température du contenu à partir de la température du capteur, il faudrait connaître l'évolution de la température. Or, les corrélations entre température du capteur et celle du contenu du récipient de cuisson varie d'une cuisson à l'autre et parfois même au cours d'une même cuisson. Cette relation varie par exemple entre une poêle avec un litre d'huile et une sauteuse en fonte avec trois litres d'huile ou un gril en fonte. L'ajout, de par exemple, 800 grammes de frites en cours de cuisson modifie complètement la température du contenu du récipient et n'influencent qu'avec un certain retard et de façon amortie la variation de la température du capteur.

On a déjà proposé dans le document FR-A-2 577 740 d'effectuer un asservissement par élaboration d'une courbe d'asservissement dans le plan (température, temps). La courbe d'asservissement partage le plan en deux surfaces distinctes. Tant que la courbe n'est pas atteinte, on effectue un chauffage à pleine puissance. Dès que la courbe est franchie, on diminue ou on arrête la puissance de chauffage. Quand le récepteur de température a détecté dans le diagramme de phase le passage de l'autre côté de la courbe d'asservissement, on effectue de nouveau le chauffage à pleine puissance ou on augmente la puissance.

Ce type de dispositif a pour but de limiter la température du récipient pour :
- éviter de détériorer la table de cuisson ;
- éviter que l'huile ne s'enflamme et risque de provoquer un incendie ;
- éviter de détériorer le récipient.

L'invention a pour but, en perfectionnant le dispositif connu, de porter le plus rapidement possible le contenu d'un récipient à une température de consigne, par exemple 180°C dans le cas de l'huile, et cela sans jamais exéder une température maximale de par exemple 400°C dans le cas d'un film d'huile.

L'invention a pour objet un appareil, caractérisé par le fait que le dispositif de contrôle élabore une courbe d'asservissement dont les points ont pour abscisse la température θ et pour ordonnée la dérivée par rapport au temps de la température dθ/dt et qu'il comporte des moyens permettant de stopper ou de diminuer l'alimentation électrique de l'élément chauffant chaque fois que la valeur de dθ/dt dépasse la valeur de l'ordonnée de la courbe pour une abscisse correspondant à la température atteinte.

L'invention a aussi pour objet un appareil, caractérisé par le fait que le dispositif de contrôle élabore une courbe dont les points ont pour abscisse la température et pour ordonnée la dérivée dθ/dt par rapport au temps t de la température θ dont le franchissement indique que l'on est en présence d'un récipient de cuisson vide ou qu'aucun récipient de cuisson n'est présent sur l'élément chauffant et les moyens pour couper l'alimentation électrique de l'élément chauffant si la courbe est franchie.

L'invention a aussi pour objet un appareil caractérisé par le fait que ledit appareil est une table de cuisson.

L'invention a aussi pour objet un appareil caractérisé par le fait que ledit appareil est une cuisinière.

L'invention a aussi pour objet un appareil caractérisé par le fait qu'il comporte une plaque vitrocéramique.

L'invention a aussi pour objet un appareil caractérisé par le fait que l'élément chauffant est un inducteur.

L'invention a également pour objet un procédé de chauffage d'un récipient pour le porter à une température θ prédéterminée, caractérisé par le fait qu'il comporte des étapes :
- de chauffage avec un élément chauffant électrique ,
- de mesures de la température atteinte θ ,
- de calcul de la dérivée dθ/dt de la température par rapport au temps t, et
- de coupure ou de diminution de puissance de l'alimentation électrique chaque fois que la valeur de θ dépasse une valeur prédéterminée pour la valeur de θ atteinte.

L'invention a également pour objet un procédé caractérisé par le fait qu'il comporte les étapes de :
- détection de l'absence de récipient à chauffer ou de la présence d'un récipient vide sur l'élément chauffant par comparaison de la valeur de dθ/dt par rapport à la valeur maximale correspondant à un récipient avec son contenu pour la valeur θ de la température atteinte,
- coupure de l'alimentation électrique de l'élément chauffant si l'on a pas détecté la présence d'un récipient avec un contenu.

L'invention sera mieux comprise au moyen de la description ci-après et des figures annexées données comme des exemples non limitatifs parmi lesquelles :
- la figure 1 est un schéma d'un premier exemple de réalisation du dispositif selon la présente invention ;

- la figure 2 est un schéma d'un second exemple de réalisation du dispositif selon la présente invention ;
- la figure 3 est un diagramme illustrant la variation spatiale de la température pour une casserole remplie d'huile posée sur une plaque vitrocéramique ;
- la figure 4 est un diagramme explicatif du principe mis en oeuvre dans l'invention ;
- la figure 5 est un diagramme illustrant l'évolution du système lors de l'utilisation de la puissance maximale ;
- la figure 6 est un diagramme illustrant l'évolution du système en absence de chauffage ;
- la figure 7 illustre l'évolution de la température jusqu'à atteindre la température de consigne $\theta_o$ ;
- la figure 8 est un diagramme illustrant l'influence de l'inertie thermique ;
- la figure 9 est un schéma illustrant le principe de la détection des casseroles vides ou d'absence de casserole sur le dispositif de cuisson ;
- la figure 10 est un exemple d'organigramme de programmes mis en oeuvre dans le dispositif selon la présente invention ;
- la figure 11 comporte deux courbes d'évolution de la température et une courbe d'évolution de la puissance ;
- la figure 12 comporte la courbe d'asservissement ainsi que la courbe d'état dans le cas d'asservissement d'une table de cuisson à inducteur de grand diamètre ;
- la figure 13 comporte une courbe d'asservissement ainsi qu'une courbe d'état illustrant l'évolution de la température dans le dispositif selon la présente invention.

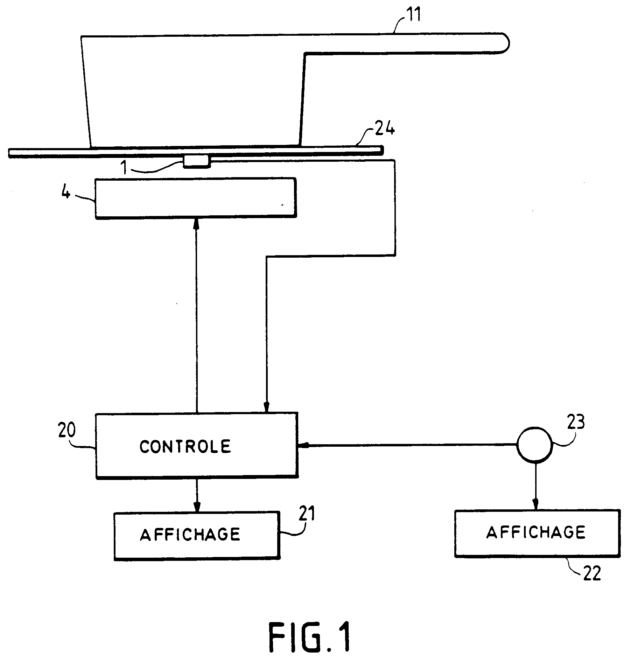

Sur les figures 1 à 13, on a utilisé les mêmes références pour désigner les mêmes éléments.

Sur la figure 1, on peut voir un exemple de réalisation d'un dispositif de chauffage selon la présente invention. Le dispositif selon la présente invention comporte le dispositif de commande 23 relié à un dispositif de contrôle 20. Le dispositif de contrôle 20 est relié à une source de chaleur 4. La source de chaleur 4 est destinée à élever la température d'un récipient 11 et de son contenu. Un capteur de température 1 est connecté au dispositif de contrôle 20. Avantageusement, le dispositif de contrôle 20 est connecté à un dispositif d'affichage 21. Avantageusement, le dispositif de commande 23 est relié à un dispositif d'affichage 22.

Le dispositif de chauffage 4 est par exemple un brûleur à gaz avantageusement du type séquentiel.

Avantageusement, le dispositif de chauffage 4 est un dispositif de chauffage électrique.

Avantageusement, le dispositif de chauffage 4 est un inducteur destiné à induire des courants électriques dans le récipient 11.

Avantageusement, une plaque de vitrocéramique est interposée entre le dispositif de chauffage 4 et/ou le capteur de température 1 et le récipient 11.

Dans l'exemple illustré dans ce Brevet, on a décrit des tables de cuisson. Il est bien entendu que l'utilisation de cuisinières ou d'enceintes de cuisson de type four ne sort pas du cadre de la présente invention.

Le dispositif de commande 23 permet de choisir une allure de chauffage, une température ou un programme de cuisson. L'affichage 22 affiche la température ou le programme choisi. L'affichage est effectué de façon numérique, alphanumérique ou par symbole. Le dispositif de contrôle 20 commande le dispositif de chauffage 4 pour exécuter le programme choisi ou pour arriver à la température désirée. Pour cela, le dispositif de contrôle 20 utilise l'information de consigne transmise par le dispositif de commande 23 ainsi que les données de température mesurée par le capteur 1. Le dispositif d'affichage 21 affiche l'heure, le temps de cuisson restant, la température actuelle ou des messages de service.

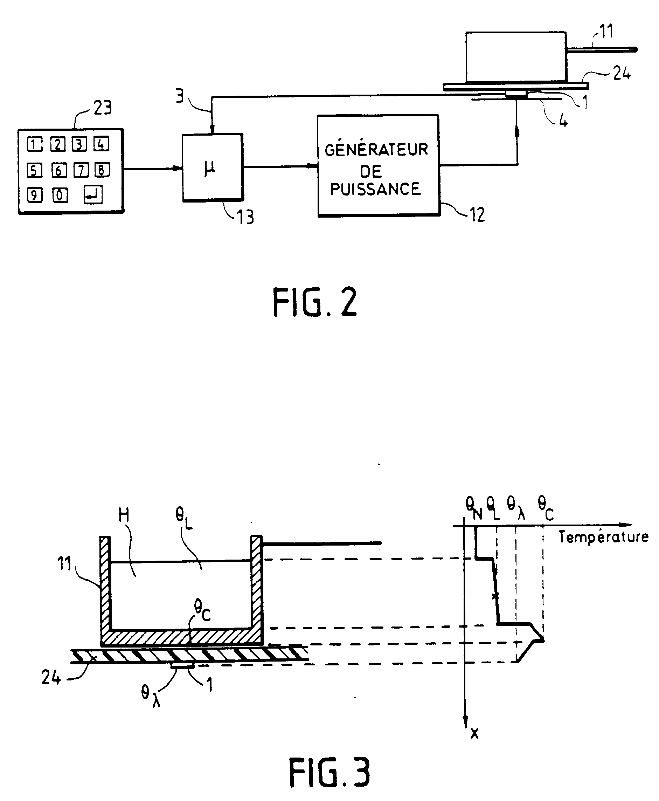

Sur la figure 2, on peut voir un exemple de réalisation particulièrement avantageux du dispositif selon la présente invention. Le dispositif de la figure 2 comporte un inducteur 4 alimenté par un générateur de puissance 12. Le générateur de puissance 12 est contrôlé par un microprocesseur 13 en fonction des consignes reçues du dispositif de commande 23 et de l'information de température 3 provenant du capteur de température 1. Le microprocesseur 13 utilise des programmes permettant d'atteindre le plus rapidement possible la température de consigne sans risque de détériorer le récipient 11 ou la table de cuisson.

On utilise par exemple le microprocesseur 63705 vendu par la Société HITACHI.

Sur la figure 3, on peut voir les diverses températures atteintes en divers points d'une casserole 11 remplie d'une huile H. La température à la surface de l'huile est différente de la température de l'air $\theta_a$. La température $\theta_c$ s'élève rapidement à l'intérieur de l'huile pour devenir relativement stable jusqu'au fond de la casserole puis s'élève plus brutalement à l'interface 8 fond interne de la casserole. La température s'élève moins brutalement en allant de l'intérieur vers l'extérieur de la casserole pour atteindre le maximum $\theta_c$ au fond externe de la casserole. La température baisse dans la plaque de vitrocéramique 24 pour atteindre la température $\theta_d$ du capteur de température 1.

La variation illustrée sur la figure 3 correspond au dispositif de la figure 2. Il peut être déterminé expérimentalement pour tout type de casserole pour un type d'appareil de cuisson donné. La figure 3 correspond à la puissance maximale. L'écart entre $\theta_c$ et $\theta_1$ augmente avec la puissance. Ainsi si on arrête le chauffage il se peut que $\theta_1$ devienne supérieur à $\theta_c$. De plus, les écarts de température changent en cours de cuisson et en fonction du contenu (nature, quantité) de la casserole 11.

Le dispositif selon la présente invention effectue l'asservissement de la température $\theta_1$ du contenu de la casserole 11 et non pas $\theta_d$ du capteur 1.

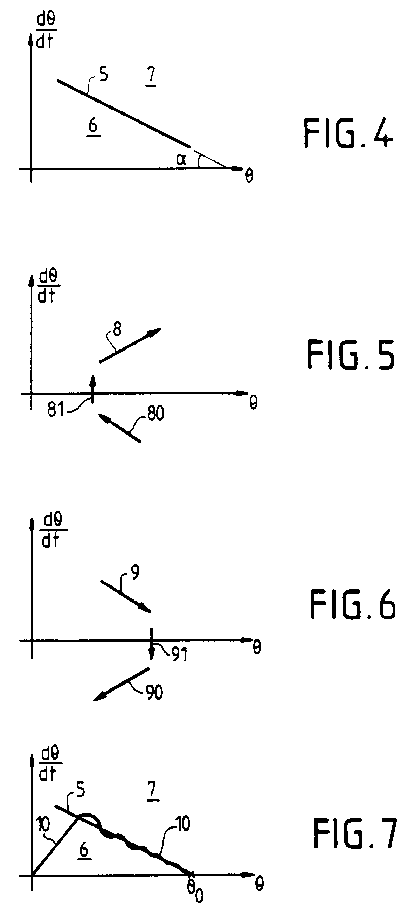

Sur la figure 4, on peut voir un exemple de réalisation de courbe d'asservissement 5 mise en oeuvre dans le dispositif selon la présente invention. La courbe 5 représente la température $\theta$ en fonction de la dérivée $d\theta/dt$ de la température $\theta$ par rapport au temps t. La courbe 5 délimite une région 6 et une région 7 du plan. Pour obtenir un appareil de cuisson efficace, il s'agit comme illustré sur la figure 5 d'atteindre le plus rapidement possible la courbe d'asservissement 5 de la figure 4. La flèche 8 indique l'évolution dans un diagramme de phase par exemple en utilisant la pleine puissance. La flèche 81 indique l'évolution dans un diagramme de phase autour de $d\theta/dt = 0$. La flèche 80 indique l'évolution dans un diagramme de phase pour les valeurs négatives de $d\theta/dt$.

Mais, il s'agit de minimiser les incursions dans la région 7 du diagramme de phase. Pour cela on diminue la puissance électrique ou on coupe la puissance électrique si la courbe 5 est dépassée. La flèche 9 de la figure 6 illustre l'évolution dans le cas de la puissance nulle. On va donc franchir dans l'autre sens la courbe 5. A partir de ce moment là on pourra remettre soit la pleine puissance soit une puissance réduite pour suivre cette courbe. La flèche 91 illustre l'évolution dans un diagramme de phase autour de $d\theta/dt = 0$. La flèche 90 illustre l'évolution dans un diagramme de phase pour les valeurs négatives de $d\theta/dt$.

Dans une variante particulièrement avantageuse du dispositif selon la présente invention, la variation de la puissance est fonction de la distance à la courbe d'asservissement 5. Ainsi, on limite les oscillations. La réduction de la puissance en fonction de la distance de la courbe d'asservissement 5 n'est pas nécessairement linéaire.

Il est bien entendu que dans l'utilisation d'autres courbes d'asservissement 5 comme par exemple des segments de droite, des élipses ou des hyperboles ne sort pas du cadre de la présente invention.

Les courbes d'asservissement 5 sont par exemple déterminées expérimentalement pour divers appareils de cuisson et pour les divers récipients ou programmes de cuisson désirés.

Sur la figure 7, on peut voir un exemple d'évolution 10 de l'état d'un appareil de cuisson jusqu'à l'obtention de la température de consigne $\theta_0$.

Toutefois, il est impératif de tenir compte de l'inertie thermique, par exemple dans le cas du chauffage par induction du temps que la chaleur se propage du fond de la casserole 11 vers le capteur de température 1.

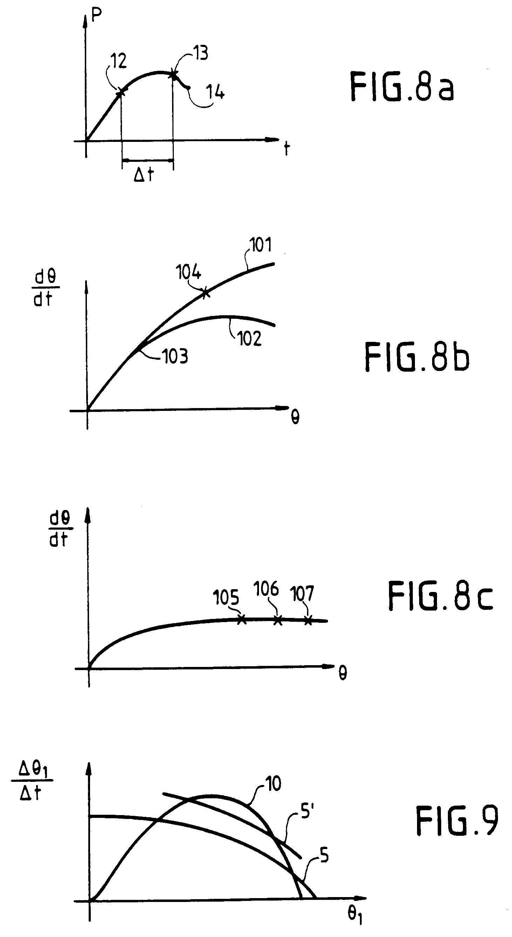

Sur la figure 8, on peut voir soit la courbe 14 représentant l'évolution de la puissance en fonction du temps. Cette courbe correspond à des asservissements utilisant pour l'expérimentation des capteurs de température placés effectivement à l'intérieur d'une casserole.

Pour déterminer une courbe d'asservissement idéale, on trace l'évolution de l'état du capteur pour différentes casseroles vides et on reporte chaque fois sur un diagramme le point 103 de la figure 8b où il aurait fallu diminuer ou couper la puissance électrique. Il faut absolument réduire la puissance avant ces points 103. La courbe 101 correspond à une casserole vide, la courbe 102 à la diminution de la puissance souhaitée et le point 104 à l'inflammation de l'huile.

D'autre part, comme on peut le voir sur la figure 8c, on effectue cette fois le même type d'opération pour des casseroles de différents types remplies d'huile, avec des quantité allant par exemple de 0,5 l à 3 l. On reporte sur le diagramme, les points 105 et 106 correspondants respectivement à 150°C dans l'huile et 110°C dans l'huile. On essaie de faire passer la courbe entre le maximum des points correspondants à 150°C et le minimum des points correspondants à 170°C, et évidemment en dessous des points 103. Le point 108 correspond à une température dans l'huile égale à 180°C.

Dès que la courbe 5' est dépassée on coupe complètement et effectivement pour cette cuisson la puissance de chauffage pour laisser refroidir la casserole ou la plaque de vitrocéramique. Le franchissement de la courbe 5 est un oubli de la ménagère. Ce dispositif permet d'économiser de l'énergie et surtout d'éviter les accidents pouvant provenir dans le cas d'une casserole surchauffée. De plus, on est sûr que la casserole surchauffée ne va pas détériorer la table en vitrocéramique 24, l'inducteur 4 ou le capteur de température 1.

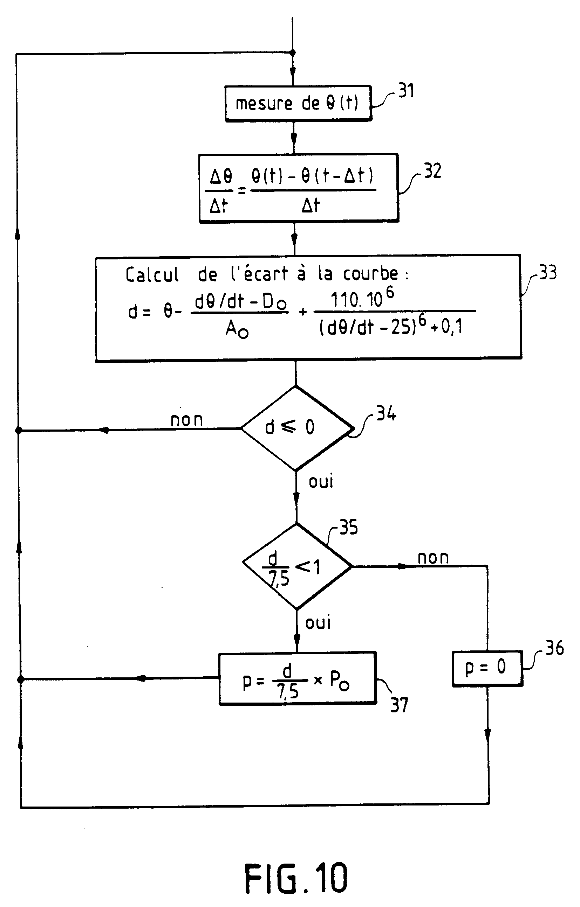

Sur la figure 10, on peut voir un exemple d'organigramme mis en oeuvre par le microprocesseur 13 de la figure 2.

En 31, on effectue la mesure de la température. On va en 32.

En 32, on effectue le calcul de la variation de la température en fonction du temps.

On va en 33.

En 33, on effectue le calcul de l'écart de température d à la courbe selon l'axe des t par exemple donné par la formule

$$d = \theta - (d\theta/dt - D_0)/A_0 + 110 \times 10^6/((d\theta/dt - 25)^6 + 0,1)$$

Par exemple pour une température de consigne $\theta_0 = 236°$, $D_0 = 26$ et $A_0 = D_0/\theta_0$.

On va en 34.

En 34, on effectue le test pour savoir si la distance à la courbe 5 est inférieure ou égale à 0.

Si non on va en 31.

Si oui, on va en 35.

En 35, on détermine si la distance à la courbe 5 est faible.

Si non on va en 36.

En 36, on réduit la puissance p à 0.

On va en 31.

Si oui, on va en 37.

En 37, on détermine la puissance réduite à appliquer à l'inducteur. La puissance est déterminée par exemple par la formule

$p = (d : 7,5) \times p_0$, $p_0$ étant la puissance initiale.

On va en 31.

Le programme est poursuivi jusqu'à la fin de l'opération de cuisson.

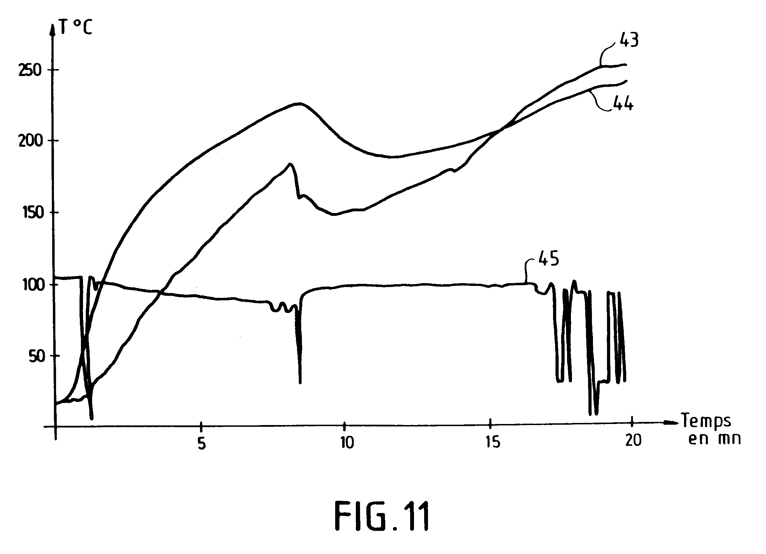

Sur la figure 11, on peut voir un exemple d'une courbe expérimentale de température en fonction du temps. La courbe 44 correspond à la température de l'huile tandis que la courbe 43 correspond à la température du capteur. Sur une échelle de temps on a rapporté la puissance alimentant le dispositif de chauffage.

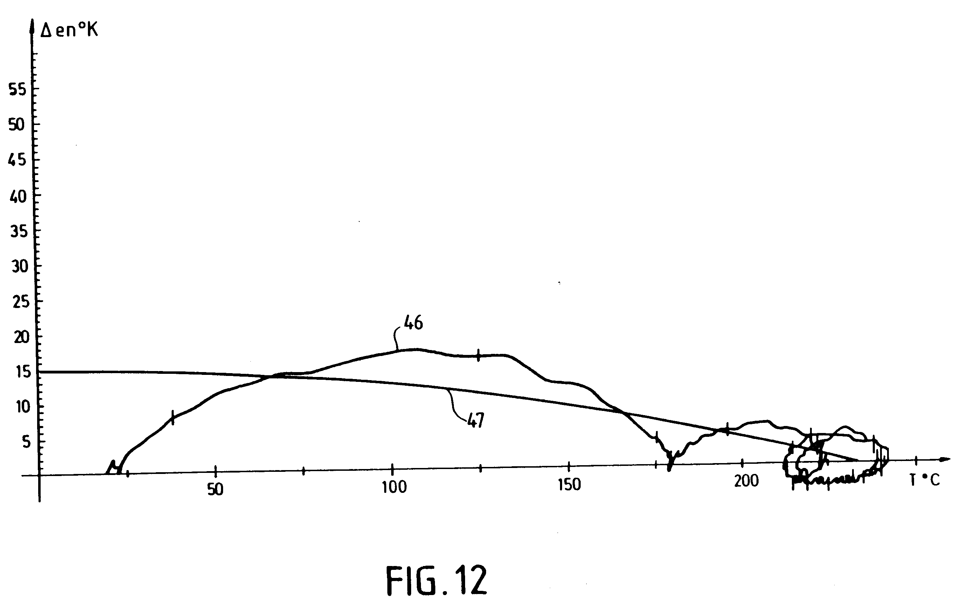

Sur la figure 12, on peut voir la courbe d'asservissement 47 très largement. dépassée par une courbe d'état 46 dans le cas d'utilisation d'un gril en fonte vide en utilisant un programme pour la cuisson des frites. Les conditions de l'expérience correspondent à un gril en fonte vendu par la Société LE CREUSET ayant un diamètre de 230 mm et une hauteur de 17 cm. Le capteur de température était une résistance à coefficient de température négative directement placée contre une plaque de vitrocéramique. La variation de la température ainsi que la température du capteur sont exprimés en degrés celsius.

Il est bien entendu qu'il est avantageux dès que la courbe 47 est largement dépassée par la courbe 46 de couper la puissance électrique dans la mesure où on a détecté qu'on est en présence d'une casserole vide et d'empêcher l'élévation de la température que l'on peut voir sur la figure 12.

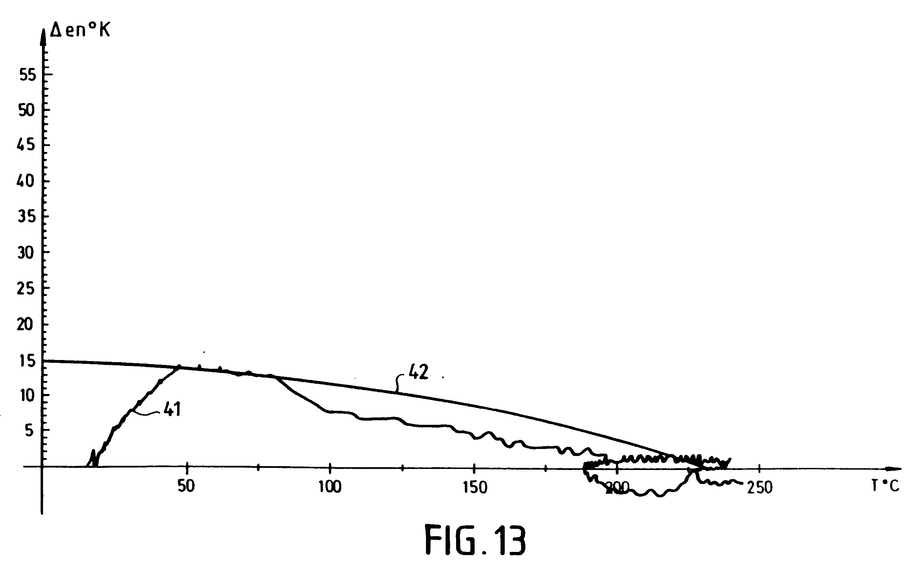

Sur la figure 13, on peut voir une courbe d'asservissement 42 et une courbe d'état 41 correspondant à une casserole pleine et un capteur de température comportant une diode à constante de température négative isolée électriquement par du mica de la plaque vitrocéramique.

La présente invention s'applique principalement à la réalisation de contrôle du dispositif de chauffage. Le dispositif selon la présente invention s'applique particulièrement bien aux tables de cuisson et notamment aux tables de cuisson à induction.

## Revendications

1. Appareil de chauffage comportant un dispositif de contrôle (13,20), un élément chauffant (4) et un capteur de température (1), caractérisé par le fait que le dispositif de contrôle (13,20) élabore une courbe (5) d'asservissement dont les points ont pour abscisse la température θ et pour ordonnée la dérivée par rapport au temps de la température dθ/dt et qu'il comporte des moyens (12) permettant de stopper ou de diminuer l'alimentation électrique de l'élément chauffant chaque fois que la valeur de dθ/dt dépasse la valeur de l'ordonnée de la courbe pour une abscisse correspondant à la température atteinte.

2. Appareil selon la revendication 1, caractérisé par le fait que le dispositif de contrôle (13,20) élabore une courbe (5') dont les points ont pour abscisse la température θ et pour ordonnée la dérivée par rapport au temps de la température dθ/dt dont le franchissement indique que l'on est en présence d'un récipient de cuisson (11) vide ou qu'aucun récipient de cuisson n'est présent sur l'élément chauffant (4) et les moyens pour couper l'alimentation électrique de l'élément chauffant (4) si la courbe (5') est franchie.

3. Appareil selon les revendications 1 ou 2, caractérisé en ce que la variation de la puissance est fonction de la distance à la courbe d'asservissement.

4. Appareil selon les revendications 1 ou 2, caractérisé en ce que la variation de la puissance est fonction du temps passé dans une zone du plan délimitée par la courbe d'asservissement.

5. Appareil selon l'une quelconque des revendications 1 à 4, caractérisé par le fait que ledit appareil est une table de cuisson.

6. Appareil selon l'une quelconque des revendications 1 à 5, caractérisé par le fait que ledit appareil est une cuisinière.

7. Appareil selon l'une quelconque des revendications 1 à 5, caractérisé par le fait qu'il comporte une plaque vitrocéramique (24).

8. Appareil selon l'une quelconque des revendications 1 à 7, caractérisé par le fait que l'élément chauffant (4) est un inducteur.

9. Procédé de chauffage d'un récipient (11) pour le porter à une température θ prédéterminée, caractérisé par le fait qu'il comporte des étapes :
   - de chauffage avec un élément chauffant électrique (4),
   - de mesures de la température atteinte θ ,
   - de calcul de la dérivée dθ/dt de la température par rapport au temps t,
   - de coupure ou de diminution de puissance de l'alimentation électrique chaque fois que la valeur de dépasse une valeur prédéterminée pour la valeur de θ atteinte.

10. Procédé selon la revendication 9, caractérisé par le fait qu'il comporte les étapes :
    - détection de l'absence de récipient (11) à chauffer ou de la présence d'un récipient vide sur l'élément chauffant (4) par comparaison de la valeur de dθ/dt par rapport à la valeur maximale correspondant à un récipient avec son contenu pour la valeur θ de la température atteinte,
    - coupure de l'alimentation électrique de l'élément chauffant si l'on n'a pas détecté la présence d'un récipient avec un contenu.

**Patentansprüche**

1. Kochgerät mit einer Regelvorrichtung (13, 230), einem Heizelement (4) und einer Temperatursonde (1), dadurch gekennzeichnet, daß die Regelvorrichtung (13, 20) eine Regelkurve (5) ausarbeitet, deren Punkte als Abszisse die Temperatur Θ und als Ordinate die zeitliche Ableitung der Temperatur dΘ/dt haben, und daß es Mittel (12) aufweist, die es ermöglichen, jedesmal dann die Stromzufuhr des Heizelements zu unterbrechen oder zu verringern, wenn der Wert von dΘ/dt den Wert der Ordinate der Kurve für eine Abszisse übersteigt, die der erreichten Temperatur entspricht.

2. Gerät nach Anspruch 1, dadurch gekennzeichnet, daß die Regelvorrichtung (13, 20) eine Kurve (5′) ausarbeitet, deren Punkte als Abszisse die Temperatur Θ und als Ordinate die zeitliche Ableitung dΘ/dt der Temperatur Θ haben, deren Überschreitung angibt, daß ein leerer Kochbehälter (11) vorliegt oder daß sich gar kein Kochbehälter auf dem Heizelement (4) befindet, und daß Mittel vorgesehen sind, um die Stromzufuhr des Heizelements (4) abzustellen, wenn die Kurve (5′) überschritten ist.

3. Gerät nach Anspruch 1 oder 2, dadurch gekennzeichnet, daß die Leistungsänderung vom Abstand zur Regelkurve abhängt.

4. Gerät nach Anspruch 1 oder 2, dadurch gekennzeichnet, daß die Leistungsänderung von der Zeit abhängt, die das Gerät sich in einem von der Regelkurve begrenzten Bereich der Ebene befunden hat.

5. Gerät nach einem beliebigen der Ansprüche 1 bis 4, dadurch gekennzeichnet, daß es eine Kochplatte ist.

6. Gerät nach einem beliebigen der Ansprüche 1 bis 5, dadurch gekennzeichnet, daß es ein Herd ist.

7. Gerät nach einem beliebigen der Ansprüche 1 bis 5, dadurch gekennzeichnet, daß es eine Glaskeramikplatte (24) aufweist.

8. Gerät nach einem beliebigen der Ansprüche 1 bis 7, dadurch gekennzeichnet, daß das Heizelement (4) ein Induktor ist.

9. Heizverfahren für einen Behälter (11), um ihn auf eine vorbestimmte Temperatur Θ zu bringen, dadurch gekennzeichnet, daß es folgende Verfahrensschritte aufweist:
    - Aufheizen mit einem elektrischen Heizelement (4),
    - Messungen der erreichten Temperatur Θ,
    - Berechnung der zeitlichen Ableitung dΘ/dt der Temperatur, und
    - Abschalten oder Verringern der Leistung der Stromversorgung jedesmal, wenn der Wert von einen vorbestimmten Wert für den erreichten Wert von Θ überschreitet.

10. Verfahren nach Anspruch 9, dadurch gekennzeichnet, daß es folgende Verfahrensschritte aufweist:
    - Erfassung der Abwesenheit eines aufzuheizenden Behälters (11) oder des Vorhandenseins eines leeren Behälter auf dem Heizelement (4) durch Vergleich des Werts von dΘ/dt in Bezug auf den maximalen Wert, der einem Behälter einschließlich Inhalt für den Wert Θ der erreichten Temperatur entspricht,
    - Abschalten der Stromversorgung des Heizelements, wenn das Vorhandensein eines Behälters mit Inhalt nicht erfaßt wurde.

**Claims**

1. Heating appliance which includes a control device (13, 20), a heating element (4) and a temperature sensor (1), characterized by the fact that the control device (13, 20) establishes a control curve (5) whose points have the temperature θ as abscissa and the derivative of the temperature with respect to time, dθ/dt, as ordinate and that it includes means (12) making it possible to stop or decrease the electrical supply to the heating element every time the value of dθ/dt exceeds the value of the ordinate of the curve for an abscissa corresponding to the temperature reached.

2. Appliance according to Claim 1, characterized by the fact that the control device (13, 20) establishes a curve (5′) whose points have the temperature θ as abscissa and the derivative of the temperature with respect to time, dθ/dt, as ordinate, the exceeding of which indicates that an empty cooking vessel (11) is present or that no cooking vessel is present on the heating element (4) and the means for cutting off the electrical supply to the heating element (4) if the curve (5′) is exceeded.

3. Appliance according to Claims 1 or 2, characterized in that the variation in the power is a function of the distance from the control curve.

4. Appliance according to Claims 1 or 2, characterized in that the variation in the power is a function of the time spent in one area in the plane, delimited by the control curve.

5. Appliance according to any one of Claims 1 to 4, characterized by the fact that the said appliance is a hob.

6. Appliance according to any one of Claims 1 to 5, characterized by the fact that the said appliance is a cooker.

7. Appliance according to any one of Claims 1 to 5, characterized by the fact that it includes a glass-ceramic plate (24).

8. Appliance according to any one of Claims 1 to 7, characterized by the fact that the heating element (4) is an inductor.

9. Method of heating a vessel (11) in order to raise it to a predetermined temperature θ, characterized by the fact that it includes stages:
   - of heating with an electrical heating element (4),
   - of measurements of the temperature reached, θ,
   - of calculation of the derivative dθ/dt of the temperature with respect to time t,
   - of cutting off or decreasing the power of the electrical supply every time the value of exceeds a predetermined value for the value of θ reached.

10. Method according to Claim 9, characterized by the fact that it includes the steps:
   - detection of the absence of a vessel (11) to be heated or of the presence of an empty vessel on the heating element (4) by comparing the value of dθ/dt with respect to the maximum value corresponding to a vessel with its contents for the value θ of the temperature reached,
   - cutting off the electrical supply to the heating element if the presence of a vessel with its contents has not been detected.

FIG.1

**FIG. 2**

**FIG. 3**

FIG.4

FIG.5

FIG.6

FIG.7

FIG.8a

FIG.8b

FIG.8c

FIG.9

mesure de $\theta(t)$ — 31

$\dfrac{\Delta\theta}{\Delta t} = \dfrac{\theta(t) - \theta(t-\Delta t)}{\Delta t}$ — 32

Calcul de l'écart à la courbe : — 33

$d = \theta - \dfrac{d\theta/dt - D_O}{A_O} + \dfrac{110.10^6}{(d\theta/dt - 25)^6 + 0,1}$

non ⟵ $d \leqslant 0$ — 34

oui

$\dfrac{d}{7,5} < 1$ — 35 ⟶ non

oui

$p = \dfrac{d}{7,5} \times P_O$ — 37

$p = 0$ — 36

FIG.10

12

FIG.11

FIG.12

EP 0 491 820 B1

FIG.13